Europäisches Patentamt

**European Patent Office**

**Office européen des brevets**

(11) Numéro de publication: **0 043 774**
**A1**

(12) **DEMANDE DE BREVET EUROPEEN**

(21) Numéro de dépôt: **81401081.5**

(22) Date de dépôt: **06.07.81**

(51) Int. Cl.³: **B 01 D 19/00,** B 01 D 17/04

(30) Priorité: **09.07.80 FR 8015300**

(43) Date de publication de la demande: **13.01.82**
**Bulletin 82/2**

(84) Etats contractants désignés: **AT BE CH DE GB IT LI LU NL SE**

(71) Demandeur: **GAZ DE FRANCE, 23, rue Philibert Delorme, F-75017 Paris (FR)**

(72) Inventeur: **Bardin, Jean-Claude, 33, rue du Moulin à vent, F-94370 Sucy en Brie (FR)**

(74) Mandataire: **Thevenet, Jean-Bruno et al, Cabinet BEAU DE LOMENIE 55 rue d'Amsterdam, F-75008 Paris (FR)**

(54) **Procédé et dispositif pour la coalescence d'une phase finement dispersée d'un mélange fluide.**

(57) Procédé et dispositif pour la coalescence d'une phase finement dispersée d'un mélange fluide.

Un garnissage filtrant (5) de matière, perméable à un mélange fluide, s'étend sur toute une section de passage du mélange.

Le pouvoir mouillant de la phase finement dispersée que l'on veut coalescer est pour la matière du garnissage (5) supérieur au pouvoir mouillant du ou des autres constituants du mélange fluide.

Application aux dispositifs séparateurs de mélanges liquides-liquides ou de mélanges liquide-gaz.

Procédé et dispositif pour la coalescence d'une phase finement
dispersée d'un mélange fluide.

La présente invention a pour objet un
procédé et un dispositif pour la coalescence d'une phase
finement dispersée d'un mélange fluide.

L'invention concerne plus particulièrement un procédé pour coalescer une phase gazeuse finement
dispersée sous forme de petites bulles gazeuses de diamètre inférieur à environ 50 µm au sein d'un mélange
fluide comprenant une phase liquide, procédé selon lequel on fait passer en continu le mélange à coalescer
à travers un matériau filtrant.

L'invention qui, d'une manière générale
est relative à la séparation d'un mélange de phases fluides, se rapporte essentiellement à la séparation d'une
phase gazeuse d'une phase liquide.

La présence de bulles de gaz dans la plupart des systèmes à circulation de fluide est indésirable. On sait par exemple que la formation de bulles
d'air dans un circuit d'eau de chauffage réduit nettement
les performances d'échange thermique de celui-ci et que
de plus, l'air entraîne une rapide corrosion des canalisations. On est ainsi amené dans de nombreuses applications à réaliser des dispositifs permettant de séparer
les différentes phases fluides de leur mélange. Par exemple de tels dispositifs sont utilisés pour séparer les
gaz produits dans un électrolyseur, de l'électrolyte lui-
même.

De nombreux dispositifs utilisant l'art
antérieur ont été développés pour cette application; ils
présentent cependant de nombreux inconvénients qui les
rendent inutilisables ou trop coûteux lorsqu'ils doivent
séparer une phase gazeuse finement dispersée dans l'électrolyte, à l'état de bulles ayant par exemple un diamètre de l'ordre de 30 microns ou inférieur. Dès que le mélange diphasique issu des cellules d'électrolyse contient une fraction notable de telles bulles gazeuses, les dispositifs utilisant l'art antérieur, par exemple les systèmes à séparation gravitaire ou les systèmes ou filtration, deviennent inefficaces et coûteux.

Il est ainsi souhaitable, notamment pour augmenter l'efficacité d'une séparation gravitaire qui est liée à la taille des bulles de la phase finement dispersée à séparer, de permettre au préalable l'obtention de bulles de taille la plus grande possible. Pour cela, on vise à coalescer la phase finement dispersée à séparer, c'est-à-dire que l'on cherche par passage du mélange fluide chargé de bulles de petite taille à travers un filtre à faire s'unir les bulles de petite taille pour former des bulles de taille supérieure.

Il est déjà connu, dans le cadre de la séparation liquide/liquide, et notamment de la séparation eau/huile, de provoquer la coalescence des gouttelettes d'huile par passage du mélange de ce liquide à travers un filtre coalesceur constitué par un matériau fibreux ou poreux, tel que de l'amiante par exemple.

Or, il s'est avéré que la mise en oeuvre de tels types de matériaux filtrants dans le cadre notamment de mélanges liquide/gaz, était incapable de provoquer aucun effet coalesceur sensible sur la phase gazeuse. Les procédés de coalescence de l'art antérieur se sont ainsi révélés être particulièrement limités dans leurs applications.

La présente invention vise précisément à remédier aux inconvénients des procédés et dispositifs de l'art antérieur afin de permettre de réaliser avec un matériau filtrant la coalescence efficace d'une phase prescrite dans un mélange fluide polyphasique.

Ces buts sont atteints grâce à un procédé de coalescence du type mentionné en tête de la description, selon lequel, conformément à l'invention, le matériau filtrant est choisi de telle manière que le pouvoir mouillant de la phase gazeuse finement dispersée que l'on veut coalescer soit pour ce matériau supérieur au pouvoir mouillant du ou des autres constituants du mélange de fluides.

Ainsi, grâce à cette caractéristique qui est nouvelle par rapport à l'art antérieur, on a pu observer que la coalescence d'une phase gazeuse dans un mélange fluide contenant une phase liquide, tel qu'un électrolyte, pouvait seule se produire par le passage du mélange fluide dans un matériau filtrant possédant un caractère hydrofuge très marqué qui fasse en sorte que ce matériau soit mouillé préférentiellement par la phase gazeuse.

Le procédé selon l'invention est avantageusement appliqué à la coalescence d'une phase gazeuse présente dans le mélange à traiter sous forme de petites bulles gazeuses de diamètre inférieur à environ 50 microns, le mélange à traiter traversant le matériau filtrant sous la forme d'un flux sous pression.

L'invention a encore pour objet un dispositif coalesceur pour faire coalescer une phase gazeuse finement dispersée, d'un mélange fluide contenant une phase liquide, tel qu'un flux d'électrolyte, comprenant une enceinte dans laquelle circule le mélange fluide et à l'intérieur de cette enceinte un garnissage filtrant de matière perméable au mélange fluide et s'étendant sur toute une section de passage de l'enceinte, la phase à coalescer du mélange fluide présentant vis-à-vis de ladite matière de garnissage un pouvoir mouillant différent de celui des autres phases du mélange fluide, caractérisé en ce que la matière de garnissage filtrant est choisie de telle manière que le pouvoir mouillant de la phase gazeuse finement dispersée que l'on veut faire coalescer soit pour cette matière supérieur au pouvoir mouillant des autres phases du mélange fluide.

Dans ce dispositif, le garnissage de matière est constitué de matière fibreuse, filamenteuse, poreuse, tubulaire ou de toute autre texture assurant une grande surface de contact avec le mélange de fluides à traiter.

.Dans le cas d'une application à la coalescence du gaz produit lors·de l'électrolyse alcaline de l'eau et présent dans le flux d'électrolyte, le garnissage filtrant est constitué d'une matière fortement hydrofuge de sorte qu'il est mouillé préférentiellement par la phase gazeuse.

De façon avantageuse, le garnissage filtrant de matière hydrofuge comprend un ou plusieurs des matériaux hautement hydrofuges constitués par les matières plastiques perfluorées ou les polymères hydrophobes tels que le polypropylène, le polysulfure de phénylène, les asphaltènes, les quinoxalines.

Un effet coalesceur est plus particulièrement marqué lorsque le garnissage filtrant de matière hydrofuge comprend de la laine de polytétrafluoroéthylène.

Selon une caractéristique particulière du dispositif coalesceur, le garnissage filtrant est disposé dans l'enceinte entre deux grilles métalliques situées respectivement du côté des faces amont et aval du garnissage filtrant.

Le dispositif coalesceur selon l'invention peut être inséré dans le circuit de circulation du mélange issu d'un générateur électrolytique sous pression en amont d'un dispositif de séparation tel qu'un dispositif à séparation par gravité.

D'autres caractéristiques et avantages de l'invention ressortiront de la description qui fait suite de modes particuliers de réalisation donnés uniquement à titre d'exemples, en référence au dessin annexé, sur lequel :

- la figure 1 est une vue schématique en coupe axiale d'un dispositif coalesceur selon l'invention, et

- la figure 2 est une vue schématique d'une installation d'électrolyse incorporant le dispositif coalesceur de la figure 1.

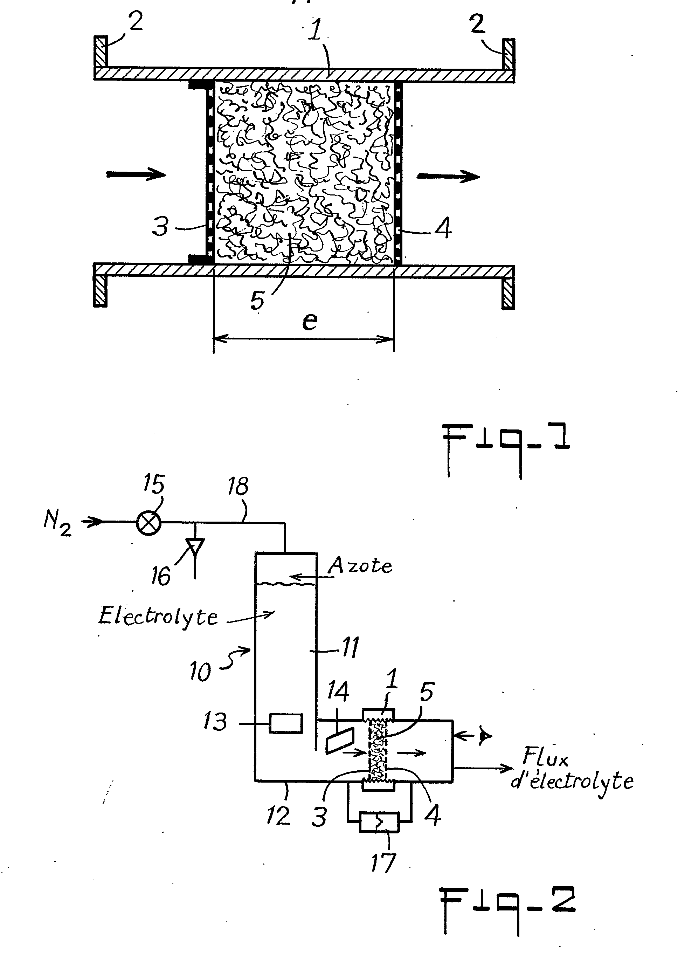

On a représenté sur la figure 1, un dispositif coalesceur comprenant une enceinte 1 de préférence capable de supporter de hautes pressions de flux et susceptible d'être insérée dans un circuit de circulation du mélange fluide dont une phase est à coalescer. L'enceinte 1 peut être munie de brides 2 à ses deux extrémités afin de faciliter le montage dans une canalisation d'un circuit de circulation existant. Un matériau filtrant de remplissage 5 est disposé sur toute la section de passage du mélange de fluides dans l'enceinte 1 et se trouve maintenu par deux grilles métalliques 3, 4, par exemple en nickel, reliées à l'enceinte 1 et retenant le matériau de remplissage 5 sur ses faces amont et aval respectivement.

Le matériau filtrant de remplissage 5 est constitué de fibres, filaments, fils, tubes, bandelettes ou de toute autre texture afin de permettre une grande surface de contact entre le matériau 5 et le flux de liquide qui circule dans l'enceinte 1 selon le sens des flèches de la figure 1.

Le dispositif de la figure 1 est adapté à un fonctionnement avec des flux de fluides sous pression et doit comprendre un matériau de remplissage 5 disposé de manière à conserver une grande perméabilité au flux de fluides et à opposer ainsi une faible perte de charge au circuit de fluide, tout en permettant un libre passage des impuretés solides si elles existent dans le flux et en présentant une vitesse de corrosion relativement réduite.

Selon l'invention, il est essentiel que le matériau de remplissage 5 utilisé présente la propriété d'être mouillé préférentiellement par la phase finement dispersée que l'on veut coalescer et séparer. Ainsi, la nature du matériau 5 est essentielle, tandis que son agencement joue un rôle secondaire. Si le matériau 5 peut être placé dans une enceinte 1 indépendante, il peut aussi être incorporé à une enceinte constituée par une structure préexistante, par exemple les parois d'un séparateur de l'art antérieur. La disposition du matériau de remplissage 5 n'est pas critique dès lors que ce matériau est en contact avec le flux à traiter.

Dans le cas de la coalescence de bulles gazeuses dans un flux de mélange tel qu'un mélange issu d'un générateur électrolytique, le matériau 5 doit posséder une différence de mouillabilité très marquée entre les phases à séparer. Ce matériau peut ainsi être constitué d'un ou plusieurs matériaux hautement hydrofuges, tels que, par exemple, des matériaux plastiques perfluorés, ou d'autres polymères hydrophobes, comme le polypropylène, le polysulfure de phénylène, les asphaltènes, quinoxalines  etc. Un des matériaux préférés est de la laine de polytétrafluoroéthylène (P.T.F.E.).

Si l'efficacité de la coalescence dépend surtout de la nature du matériau de remplissage utilisé, d'autres paramètres peuvent naturellement intervenir sur la coalescence, et notamment les caractéristiques dimensionnelles et la texture du filtre (en particulier dimension des pores, épaisseur dans le sens d'écoulement du flux, perméabilité du filtre au liquide), la taille des bulles de la phase gazeuse à faire coalescer, la vitesse d'écoulement du fluide à travers le filtre et les propriétés physiques du mélange fluide vecteur-gaz. La valeur de ces paramètres peut toutefois être facilement déterminée en fonction des diverses applications envisagées.

La taille des bulles d'une phase gazeuse à faire coalescer peut être déterminée expérimentalement. Par exemple, dans le cas de bulles de gaz générées par électrolyse de l'eau à pression atmosphérique dans une solution aqueuse de potasse, la taille des bulles est déterminée par la hauteur de colonne de potasse qu'elles franchissent pendant un temps donné sous l'action des forces qui s'exercent sur une bulle dans ces conditions, à savoir la poussée d'Archimède et la résistance du liquide. En effet, ces forces dépendent du rayon d'une bulle et la valeur de tous les autres paramètres intervenant, tels que viscosité du liquide ou masses volumiques du liquide et du gaz, peut être facilement connue.

La vitesse d'écoulement du mélange fluide à travers le filtre est facilement déterminable à partir des mesures de débit du fluide et de la section de passage qu'offre le filtre au fluide.

Les caractéristiques particulières du filtre qui, outre la nature du matériau de remplissage 5 utilisé, sont les caractéristiques dimensionnelles et la texture du garnissage du filtre, peuvent être entièrement déterminées à partir des caractéristiques connues d'un flux donné de mélange fluide diphasique ou plus généralement polyphasique dont une phase finement dispersée doit être coalescée.

Toutefois, il a été mis en évidence que l'efficacité de la coalescence dépend, dans le cas de la coalescence d'une phase gazeuse, essentiellement d'une part, de la nature du matériau de remplissage 5 utilisé et, naturellement, de la surface de contact entre ce matériau et le mélange fluide à traiter, et, d'autre part, de la tension superficielle du flux et de la dimension des bulles gazeuses à coalescer.

Il est ainsi intéressant de prendre en compte l'ensemble de ces facteurs pour améliorer l'efficacité d'un filtre coalesceur et faciliter une séparation entre phases dans le cadre de diverses applications mettant en oeuvre divers mélanges polyphasiques et débits. On notera d'une manière générale que le dispositif coalesceur selon l'invention se distingue par sa grande efficacité à relativement haut débit, ce qui est particulièrement avantageux pour traiter un mélange fluide sous pression, car le conteneur, ou enceinte 1, nécessaire devient toujours de taille relativement réduite. Par ailleurs, le dispositif coalesceur selon l'invention, grâce à sa grande simplicité de conformation, peut être facilement nettoyé ou échangé en cas de besoin.

On décrira maintenant en relation avec la figure 2 une application particulière du procédé et du dispositif coalesceur selon l'invention à un procédé et une installation électrolytiques de production de gaz.

L'installation représentée schématiquement sur la figure 2 permet de produire par électrolyse d'une solution aqueuse concentrée de potasse de l'oxygène et de l'hydrogène.

L'installation 10 peut comprendre une enceinte verticale d'électrolysé 11, par exemple en polymétacrylate de méthyle et une deuxième enceinte sensiblement horizontale 12, qui peut être également en polymétacrylate de méthyle et qui est en communication avec la partie inférieure de la première enceinte 11. Une anode 13 et une cathode 14, par exemple en nickel sont disposées à distance l'une de l'autre au voisinage de la zone de raccordement entre les enceintes 11 et 12.

L'électrolyte est présent dans l'enceinte 11 et circule dans l'enceinte 12 sous l'action de la pression exercée par un circuit d'azote 18. La pression peut s'élever jusqu'à environ 1,5 bar et favorise une circulation d'électrolyte importante à travers tout le système (anode 13, cathode 14, filtre 5). Le flux d'électrolyte se retrouve à la pression atmosphérique à la sortie du système. Les références 15 et 16 désignent un détecteur et un capteur de pression totale placés sur le circuit de pressurisation.

Dans l'installation de la figure 2, la production électrolytique contrôlée de microbulles gazeuses est effectuée au niveau de la cathode 14, le flux d'électrolyte comprenant la phase gazeuse constituée par les microbulles finement dispersées traverse alors le filtre 5 comprenant, entre les plaques perforées amont et aval 3 et 4, un matériau de remplissage tel que défini plus haut en référence à la figure 1. Un capteur de pression différentielle 17 peut être monté au voisinage du filtre 5 pour déterminer la chute de pression à l'intérieur du matériau de remplissage. Un dispositif de séparation gravitaire, non représenté, peut être disposé en aval du filtre 5. Une action convenable sur la tension superficielle du flux et l'activation de la cathode 14 permettent de modifier le fonctionnement de l'ensemble de l'installation de production de gaz, particulièrement en ce qui concerne les dimensions de bulles gazeuses qu'il sera nécessaire de coalescer. Le dispositif de séparation peut avoir son efficacité très fortement accrue dans la mesure où le matériau de remplissage du filtre 5 est constitué conformément à la présente invention, telle que définie en référence à la figure 1.

A titre d'exemple, on a constaté, avec une installation telle que celle schématisée sur la figure 2, une efficacité spectaculaire en utilisant de la laine grossière de P.T.F.E. comme matériau de remplissage 5, lors du traitement d'un mélange contenant des bulles d'hydrogène de diamètre voisin de 15 microns, un tensio-dépresseur et de la potasse à 25 % en poids, lorsque le débit est voisin de 3 litres par heure et par $cm^2$. Dans ce cas, les bulles gazeuses effluentes en aval du filtre 5 ont un diamètre voisin d'un millimètre et peuvent ensuite facilement se séparer de l'électrolyte par gravité.

Divers essais effectués en utilisant des filtres 5 d'épaisseur e comprise entre environ 1 et 30mm, de dimensions de pores variées et avec des débits de liquide compris entre environ 20 litres par heure et 60 litres par heure pour une section de filtre égale à 20 $cm^2$, se sont révélés particulièrement satisfaisants, dans la mesure où un matériau hydrofuge du type P.T.F.E. a été utilisé, et bien que le mélange ait compris un électrolyte avec tensio-actif. En revanche, l'utilisation de matériaux traditionnels en matière de filtres coalesceurs, comme l'amiante, n'a pas pu conduire à l'obtention de résultats convenables, dans des conditions similaires, c'est-à-dire n'a pas pu produire d'effet coalesceur marqué vis-à-vis des microbulles gazeuses.

A titre d'exemple supplémentaire, un filtre constitué de laine de P.T.F.E. à 45 g pour $80cm^3$, serré entre deux grilles de nickel et présentant une épaisseur totale de 2,5cm a permis de vérifier que pour des débits compris entre 20 l/h et 60 l/h pour une section de filtre de 20 $cm^2$ occasionnant des pertes de charge allant de 4 à 20 mbars, des bulles coalescées de taille uniforme (1 mm de diamètre environ) apparaissent sur la face aval du filtre à des intervalles de temps réguliers, tandis que les bulles présentes en amont du

11

0043774

filtre ont un rayon moyen d'environ 15 µm.

Bien entendu, diverses modifications et adjonctions pourront être apportées par l'homme de l'art aux dispositifs et applications qui viennent d'être décrits sans sortir du cadre de l'invention.

REVENDICATIONS

1. Procédé pour coalescer une phase gazeuse finement dispersée sous formé de petites bulles gazeuses de diamètre inférieur à environ 50 μm au sein d'un mélange fluide comprenant une phase liquide, procédé selon lequel on fait passer en continu le mélange à coalescer à travers un matériau filtrant, caractérisé en ce que le matériau filtrant est choisi de telle manière que le pouvoir mouillant de la phase gazeuse finement dispersée que l'on veut coalescer soit pour ce matériau supérieur au pouvoir mouillant du ou des autres constituants du mélange de fluides.

2. Procédé selon la revendication 1, caractérisé en ce que le mélange à traiter traverse le matériau filtrant sous la forme d'un flux sous pression.

3. Procédé selon la revendication 1 ou la revendication 2, caractérisé en ce qu'il est appliqué à la coalescence d'une phase gazeuse contenue dans un mélange de fluides comprenant une phase liquide qui provient de l'électrolyse alcaline de l'eau.

4. Procédé selon la revendication 3, caractérisé en ce que le matériau filtrant est un polymère hydrophobe.

5. Procédé selon la revendication 4, caractérisé en ce que le matériau filtrant est du polytétrafluoroéthylène.

6. Dispositif coalesceur pour coalescer une phase gazeuse finement dispersée, d'un mélange fluide contenant une phase liquide, tel qu'un flux d'électrolyte, comprenant une enceinte (1) dans laquelle circule le mélange fluide et à l'intérieur de cette enceinte un garnissage filtrant (5) de matière perméable au mélange fluide et s'étendant sur toute une section de passage de l'enceinte (1), la phase à coalescer du mélange fluide présentant vis-à-vis de ladite matière de garnissage un pouvoir mouillant différent de celui des autres phases du mélange fluide, caractérisé en ce que la matière de garnissage filtrant est choisie de telle manière que le pouvoir mouillant de la phase gazeuse finement dispersée que l'on veut faire coalescer soit pour cette matière supérieur au pouvoir mouillant des autres phases du mélange fluide.

7. Dispositif coalesceur selon la revendication 6, caractérisé en ce que le garnissage (5) est constitué d'une matière fibreuse, filamenteuse, ou d'une texture assurant une grande surface de contact avec le mélange de fluides à traiter.

8. Dispositif coalesceur selon la revendication 6 ou la revendication 7 appliqué à la coalescence du gaz produit lors de l'électrolyse alcaline de l'eau et présent dans le flux d'électrolyte, caractérisé en ce que le garnissage filtrant (5) est constitué d'une matière fortement hydrofuge de sorte qu'il est mouillé préférentiellement par la phase gazeuse.

9. Dispositif coalesceur selon la revendication 8, caractérisé en ce que le garnissage filtrant (5) de matière hydrofuge comprend un ou plusieurs des matériaux hautement hydrofuges constitués par les matières plastiques perfluorées, ou les polymères hydrophobes tels que le polypropylène le polysulfure de phénylène, les asphaltènes, les quinoxalines.

10. Dispositif selon la revendication 8 ou la revendication 9, caractérisé en ce que le garnissage filtrant (5) de matière hydrofuge comprend de la laine de polytétrafluoroéthylène.

11. Dispositif selon l'une quelconque des revendications 6 à 10, caractérisé en ce que le garnissage filtrant (5) est disposé dans l'enceinte (1) entre deux grilles métalliques 3, 4.

12. Dispositif selon l'une quelconque des revendications 6 à 11, caractérisé en ce qu'il est inséré dans le circuit de circulation du mélange issu d'un générateur électrolytique sous pression en amont d'un dispositif de séparation tel qu'un dispositif à séparation par gravité.

1/1

Fig-1

Fig-2

Office européen
des brevets

**RAPPORT DE RECHERCHE EUROPEENNE**

0043774

Numéro de la demande

EP 81 40 108

| | **DOCUMENTS CONSIDERES COMME PERTINENTS** | | | **CLASSEMENT DE LA DEMANDE (Int. Cl.³)** |
|---|---|---|---|---|
| Catégorie | Citation du document avec indication, en cas de besoin, des parties pertinentes | Revendication concernée | | |
| X | US - A - 3 377 778 (R.F. GAERTNER) <br> * figure 3; colonne 3, ligne 70 - colonne 5, ligne 31 * <br> -- | 1,2,4-7,9,10 | | B 01 D 19/00 <br> B 01 D 17/04 |
| P/E | EP - A - 0 024 701 (HOECHST AG) <br> * figure 1; page 2, ligne 29 - page 3, ligne 4; page 7, lignes 1 à 17 * <br> -- | 1,2,6 | | |
| A | US - A - 2 518 845 (Ph.H. WILLIAMS) <br> ------- | | | **DOMAINES TECHNIQUES RECHERCHES (Int. Cl.³)** <br><br> B 01 D 19/00 <br> B 01 D 17/00 |

**CATEGORIE DES DOCUMENTS CITES**

X: particulièrement pertinent

A: arrière-plan technologique

O: divulgation non-écrite

P: document intercalaire

T: théorie ou principe à la base de l'invention

E: demande faisant interférence

D: document cité dans la demande

L: document cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 04.09.1981 | BOGAERTS |

OEB Form 1503.1  06.78